# FASCICULE DE BREVET EUROPEEN

(11) **EP 3 032 466 B1**
(45) Date de publication et mention de la délivrance du brevet: **22.11.2017**
(21) Numéro de dépôt: 15197528.1
(22) Date de dépôt: 02.12.2015
(51) Int. Cl.: G06K 19/07, G01K 11/06

(54) **RADIO-ETIQUETTE**
FUNKETIKETT
RADIO TAG

(30) Priorité: 11.12.2014 FR 1462291
(43) Date de publication de la demande: 15.06.2016
(73) Titulaire: Commissariat à l'Énergie Atomique et aux Énergies Alternatives, 75015 Paris (FR)
(72) Inventeur: ALARCON RAMOS, Juvenal, 38000 GRENOBLE (FR); VIALA, Bernard, 38360 SASSENAGE (FR)
(74) Mandataire: GIE Innovation Competence Group

(56) Documents cités:
- US-A1- 2004 061 655
- US-A1- 2008 007 253
- US-A1- 2010 079 288

## Description

L'invention concerne une radio-étiquette apte à indiquer à un lecteur, par l'intermédiaire d'une liaison sans-fil, qu'une variation d'énergie a franchi un seuil prédéterminé, cette variation d'énergie étant choisie dans le groupe composé d'une variation de la température de la radio-étiquette et d'une variation du champ magnétique dans lequel est plongé la radio-étiquette. L'invention concerne également un ensemble comportant cette radio-étiquette et un lecteur.

Les radio-étiquettes sont également connues sous le terme de « étiquette RFID (Radio Frequency IDentification)» ou sous le terme anglais de « Tag RFID ».

Des radio-étiquettes connues comportent :
- un substrat électriquement isolant,
- une antenne pour établir la liaison sans-fil avec le lecteur, cette antenne étant entièrement déposée et fixée sans aucun degré de liberté sur le substrat isolant, et
- un actionneur apte à modifier l'impédance de cette antenne lorsque la variation d'énergie franchit le seuil prédéterminé pour indiquer au lecteur cet événement, cet actionneur comportant à cet effet un matériau transducteur apte à transformer la variation d'énergie en une déformation mécanique, le matériau transducteur étant choisi dans un groupe composé d'un matériau à mémoire de forme thermique, d'un matériau magnétostrictif et d'un matériau à mémoire de forme magnétique.

Par exemple, une telle radio-étiquette est divulguée dans l'article suivant : R. Bhattacharyya et al : « RFID Tag Antenna Based Temperature Sensing in the Frequency Domain », RFID, 2011, IEEE Conference On RFID. Par la suite, cet article est appelé article A1 dans cette description.

De l'état de la technique est également connu de :
US2004/061655A1 (qui est considéré comme l'état de la technique le plus proche de l'objet de la revendication 1),
US2008/007253 et US2010/079288A1.

Dans l'article A1, l'actionneur comporte une plaque en matériau électriquement conducteur fixée sur un bras en matériau à mémoire de forme thermique. Dans la suite de la description, sauf indication contraire, par « matériau à mémoire de forme », on désigne un matériau à mémoire de forme thermique, c'est-à-dire un matériau qui se déforme brusquement lorsque sa température franchit un seuil S_{T} de température. Ce seuil de température est aussi appelé « température de transition » du matériau. Par simplification, on néglige ici les phénomènes d'hystérésis de sorte que l'on considère que la température de transition est la même lorsque l'on chauffe et lorsque l'on refroidit le matériau à mémoire de forme.

Lorsque la température est inférieure au seuil S_{T}, le bras maintient la plaque dans une position éloignée de l'antenne. Dans la position éloignée, la plaque est à environ 1 cm sous l'antenne. Si la température de la radio-étiquette dépasse le seuil S_{T}, alors le bras se déforme et déplace la plaque jusqu'à une position rapprochée. Dans sa position rapprochée, la plaque est à environ 3 mm sous l'antenne. La présence ou non de la plaque à proximité de l'antenne modifie son impédance. La modification de l'impédance de l'antenne est détectable par le lecteur. Ainsi, le lecteur peut savoir si la température de la radio-étiquette a dépassé ou non le seuil S_{T}.

De telles radio-étiquettes capables d'indiquer si un seuil de température a été dépassé ont de nombreuses applications. Par exemple, elles peuvent être utilisées, lorsqu'elles sont fixées sur un produit congelé, pour vérifier que la chaîne du froid a été respectée et que la température du produit congelé et donc celle de la radio-étiquette n'a jamais dépassée le seuil S_{T}. Bien sûr, le domaine d'application de telles radio-étiquettes n'est pas limité aux produits congelés. Elles peuvent être utilisées sur n'importe quel objet dont la température doit être surveillée à un moment ou à un autre.

Dans l'article A1, l'antenne est simple à fabriquer car elle est entièrement déposée sur le substrat isolant. De nombreux procédés de fabrication sont alors utilisables pour la fabriquer simplement. Par exemple, l'antenne peut être fabriquée par dépôt d'une couche conductrice sur le substrat puis gravure de cette couche conductrice. L'antenne peut aussi être réalisée par projection localisée sur le substrat d'une encre conductrice. Par contre, la réalisation de l'actionneur complexifie sérieusement la fabrication de cette radio-étiquette. En effet, pour fabriquer l'actionneur il faut assembler, dans un même boîtier, une plaque et un bras mobiles. De plus, l'encombrement vertical de l'actionneur est relativement important à cause du déplacement vertical de la plaque.

Un autre mode de réalisation d'une telle radio-étiquette a été proposé dans l'article suivant : S. Caizzone et al. : « Multi-chip RFID Antenna Integrating Shape-Memory Alloys for Detection of Thermal Thresholds », IEEE 2011. Toutefois, cette radio-étiquette est aussi complexe à réaliser car la fabrication d'un interrupteur électrique en matériau à mémoire de forme n'est pas une chose simple, comme le souligne lui-même l'auteur de cet article.

Un autre mode de réalisation possible est également divulgué dans la demande JP2009162700 de la société HITACHI®. Dans cette demande de brevet, l'antenne comporte une partie réalisée en matériau à mémoire de forme. Cette partie de l'antenne se déploie et, en alternance, se replie sur elle-même. Pour cela, elle est ancrée, d'un côté, dans une paroi et montée en porte-à-faux à l'intérieur d'une cavité. Ainsi, dans la demande JP2009162700, l'antenne n'est pas entièrement déposée sur un substrat isolant de sorte que les procédés simples de fabrication habituellement utilisés ne peuvent pas être employés. Dès lors, comme précédemment, ce mode de réalisation de la radio-étiquette s'avère complexe à fabriquer.

L'état de la technique décrit ci-dessus concerne des radio-étiquettes capables de détecter le franchissement d'un seuil S_{T} de température. Toutefois, les mêmes problèmes de réalisation se rencontrent avec une radio-étiquette capable de détecter une variation du champ magnétique dans lequel elle est plongée.

L'invention vise donc à proposer une radio-étiquette plus simple à fabriquer. Elle a donc pour objet une radio-étiquette conforme à la revendication 1.

La radio-étiquette ci-dessus conserve la simplicité de fabrication de l'antenne puisqu'il s'agit d'une antenne déposée sur un substrat. De plus, dans la radio-étiquette revendiquée, l'actionneur qui modifie l'impédance de l'antenne est beaucoup plus simple à fabriquer puisqu'il s'agit, comme l'antenne, d'un matériau transducteur déposé sur le substrat. Ainsi, ce matériau transducteur peut être déposé sur le substrat par les mêmes procédés que ceux utilisées pour fabriquer l'antenne. En particulier, un tel matériau peut être déposé par collage d'un fil sur le substrat, par photolithographie et gravure ou par impression, par exemple à l'aide d'une imprimante à jet d'encre.

De plus, pour modifier l'impédance de l'antenne, il n'est pas nécessaire :
- de déplacer une plaque en matériau électriquement conducteur entre une position rapprochée et une position éloignée, ou
- de réaliser un interrupteur en matériau à mémoire de forme, ou encore
- de réaliser une antenne en porte-à-faux déplaçable entre une position déployée et une position repliée.

Ainsi, l'antenne revendiquée permet de détecter le franchissement d'un seuil de température ou de champ magnétique tout en restant simple à fabriquer.

Les modes de réalisation de cette radio-étiquette peuvent comporter une ou plusieurs des caractéristiques des revendications dépendantes.

Ces modes de réalisation de la radio-étiquette présentent en outre les avantages suivants :
- Le fait que le matériau transducteur constitue également au moins une partie de l'antenne permet de simplifier encore plus la fabrication de cette radio-étiquette puisque le même matériau transducteur remplit à la fois la fonction d'actionneur et d'antenne.
- Le fait que la totalité de l'antenne soit constituée dans le matériau transducteur simplifie la fabrication de la radio-étiquette puisqu'il n'est alors pas nécessaire de prévoir des raccords électriques entre ce matériau transducteur et une piste conductrice. En effet, souvent, de tels raccords électriques entre un matériau transducteur et un matériau simplement conducteur sont complexes à réaliser et souvent fragiles.
- L'absence de puce électronique dans la radio-étiquette permet de simplifier encore plus sa fabrication.
- L'utilisation d'un matériau à mémoire de forme en tant que matériau transducteur permet de détecter un franchissement d'un seuil de température.
- Utiliser un matériau transducteur dont la déformation est irréversible permet en plus de mémoriser le franchissement du seuil prédéterminé même en absence de lecteur.
- Le fait que l'amplitude du débattement maximal de l'antenne entre ses conformations fléchie et moins fléchie soit au moins supérieure à l'épaisseur de l'antenne, facilite l'identification de ces deux conformations.

L'invention a également pour objet un ensemble conforme à la revendication 10.

Dans l'ensemble ci-dessus, le franchissement du seuil prédéterminé est codé par la fréquence de l'onde électromagnétique utilisée pour communiquer avec le lecteur. Ce moyen de coder l'information selon laquelle le seuil prédéterminé a été franchi ou non est indépendant de la distance qui sépare le lecteur de la radio-étiquette.

L'invention sera mieux comprise à la lecture de la description qui va suivre, donnée uniquement à titre d'exemple non limitatif tout en se référant aux dessins sur lesquels :
- la figure 1 est une illustration schématique d'un ensemble utilisé pour détecter le franchissement d'un seuil de température ;
- la figure 2 est une illustration en vue de dessus d'un premier mode de réalisation d'une radio-étiquette de l'ensemble de la figure 1 ;
- la figure 3 est une illustration en coupe verticale de la radio-étiquette de la figure 2 ;
- la figure 4 est une illustration en vue de dessus de l'étiquette de la figure 2 dans une conformation fléchie ;
- la figure 5 est une illustration schématique en coupe verticale de la radio-étiquette de la figure 4 ;
- la figure 6 est une illustration schématique, en vue de dessus, d'un deuxième mode de réalisation d'une radio-étiquette pour l'ensemble de la figure 1 ;
- la figure 7 est une illustration schématique, en coupe verticale, d'un troisième mode de réalisation d'une radio-étiquette pour l'ensemble de la figure 1 ;
- la figure 8 est une illustration schématique, partielle et en coupe verticale, d'un détail d'un quatrième mode de réalisation d'une radio-étiquette pour l'ensemble de la figure 1 ; et
- la figure 9 est une illustration en vue de dessus d'un cinquième mode de réalisation d'une radio-étiquette pour l'ensemble de la figure 1.

Dans ces figures, les mêmes références sont utilisées pour désigner les mêmes éléments. Dans la suite de cette description, les caractéristiques et fonctions bien connues de l'homme du métier ne sont pas décrites en détail.

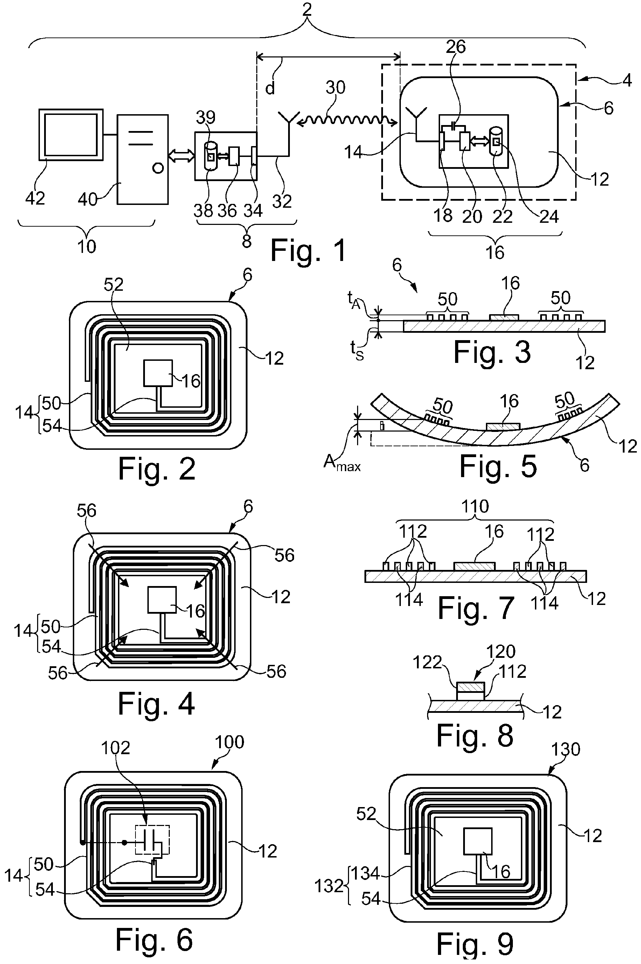

La figure 1 représente un ensemble 2 pour détecter le franchissement d'un seuil prédéterminé S_{T} par une variation d'énergie choisie dans le groupe composé d'une variation de température et d'une variation de champ magnétique. Dans le cas particulier décrit ici, l'ensemble 2 est utilisé pour détecter une variation de température d'un objet 4. L'objet 4 est par exemple un emballage, un colis, un être vivant ou tout autre objet sur lequel on peut attacher ou fixer une radio-étiquette.

A cet effet, l'ensemble 2 comporte :
- une radio-étiquette 6 solidaire de l'objet 4,
- un lecteur 8 de la radio-étiquette 6, et
- un appareil 10 de traitement des informations lues par le lecteur 8.

La radio-étiquette 6 est fixée, par exemple, sans aucun degré de liberté, sur l'objet 4 si cet objet peut se déformer et autoriser ainsi à la radio-étiquette de ce déformer. Typiquement, elle est collée sur l'objet 4. Elle peut aussi être intégrée à l'intérieur de l'objet 4 lors de sa fabrication. Il est aussi possible de fixer cette radio-étiquette sur l'objet 4 par l'intermédiaire d'une sangle ou d'un collier. Il est également possible que la radio-étiquette soit fixée sur l'objet 4 avec un degré de liberté lui permettant de se déformer. Par exemple, seule une extrémité ou un bord de la radio-étiquette est fixé sur l'objet 4.

La radio-étiquette 6 comprend :
- un substrat 12 présentant une face extérieure tournée vers le haut,
- une antenne 14 entièrement déposée et fixée sans aucun degré de liberté sur cette face extérieure du substrat 12, et
- une puce électronique 16 déposée et fixée sans aucun degré de liberté directement sur le substrat 12.

Dans ce mode de réalisation, la face extérieure est plane et horizontale tant que la température de l'antenne 14 reste inférieure au seuil S_{T}. Le substrat 12 est réalisé dans un matériau électriquement isolant. Par « matériau électriquement isolant », on désigne ici un matériau dont la résistivité à 20°C est supérieure à 10⁶ Ω.m et, de préférence, supérieure à 10¹⁰ Ω.m.

Sur la figure 1, l'antenne 14 est représentée de façon schématique. Des exemples de réalisation possibles sont décrits plus en détail en référence aux figures suivantes. L'antenne 14 permet de recevoir et d'émettre une onde électromagnétique. Dans le cas présent, elle est conçue pour réfléchir, en général une partie seulement, d'une onde électromagnétique émise par le lecteur 8. Typiquement, l'antenne 14 est constituée d'une piste électrique en matériau électriquement conducteur déposée directement sur la face extérieure du substrat 12. Par « matériau électriquement conducteur », on désigne ici un matériau dont la résistivité à 20°C est inférieure à 1 Ω.m et, de préférence, inférieure à 10⁻ ou 10⁻⁵ Ω.m. L'antenne 14 est fixée sans aucun degré de liberté sur la face extérieure du substrat 12.

De nombreux procédés sont possibles pour réaliser l'antenne 14 sur la face extérieure du substrat 12. Par exemple, l'antenne 14 est obtenue par collage d'un fil conducteur ou encore par dépôt d'une couche en matériau électriquement conducteur sur cette face extérieure puis par gravure de cette couche. L'antenne 14 peut également être obtenue par projection localisée d'une encre conductrice directement sur la face extérieure du substrat 12.

La puce électronique 16 comporte :
- un émetteur-récepteur 18 électriquement raccordé à l'antenne 14,
- un calculateur électronique 20 apte à exécuter des instructions enregistrées dans une mémoire pour traiter et émettre des informations, et
- une mémoire non volatile 22 comportant, par exemple, les instructions exécutées par le calculateur 20 et des données telles qu'un identifiant unique 24.

L'identifiant 24 permet d'identifier de façon unique cette radio-étiquette 6 parmi l'ensemble des autres radio-étiquettes susceptibles d'être lues par lecteur 8.

L'émetteur-récepteur 18 transforme au moins une partie de l'onde électromagnétique captée par l'antenne 14 en énergie électrique stockée, par exemple, dans un condensateur 26. Le condensateur 26 est intégré à l'intérieur de la puce 16. L'énergie électrique stockée dans ce condensateur 26 est ensuite utilisée, lorsqu'elle dépasse un seuil prédéterminé, pour alimenter le calculateur 20. L'émetteur-récepteur 18 démodule également l'onde électromagnétique reçue pour transformer les données codées dans cette onde électromagnétique en données numériques transmises au calculateur 20. La modulation des données transmises à la radio-étiquette 6 est par exemple une modulation d'amplitude ou une modulation de phase. Enfin, l'émetteur-récepteur 18 est aussi capable d'émettre vers le lecteur 8 des données qui lui sont transmises sous forme numérique par le calculateur 20. Par exemple, pour cela, l'émetteur-récepteur 18 modifie l'impédance d'entrée de la puce 16 en fonction des bits d'information à transmettre. La modification de l'impédance d'entrée de la puce 16 se traduit par une modification du coefficient de réflexion de l'antenne 14. La valeur de l'impédance d'entrée de la puce 16 est, par exemple, modifiée en modifiant la valeur d'une charge résistive connectée entre des bornes de l'antenne 14. Ainsi, selon la valeur du bit ou du groupe de bits à transmettre, l'amplitude de l'onde électromagnétique réfléchie par l'antenne 14 est modifiée. Cette modification du rapport entre l'amplitude de l'onde électromagnétique émise par le lecteur 8 et l'amplitude de l'onde électromagnétique réfléchie par l'antenne 14 est détectée par le lecteur 8. A partir de cette différence d'amplitudes, le lecteur en extrait la valeur du bit ou du groupe de bits transmis par la radio-étiquette. Typiquement, la partie de l'onde électromagnétique qui n'est pas réfléchie par l'antenne 14 est utilisée par l'émetteur-récepteur 18 pour charger le condensateur 26. Ce protocole de communication entre la radio-étiquette 6 et le lecteur 8 est connu sous le terme de « rétro-modulation » ou « Backscattering » en anglais. Il permet au lecteur 8 :
- de communiquer avec la radio-étiquette 6 par l'intermédiaire d'une liaison sans fil 30, et en même temps,
- d'alimenter la radio-étiquette 6.

Avec ce protocole, la liaison 30 peut être établie avec une radio-étiquette située à une distance d du lecteur. Typiquement, cette distance d est supérieure à 2 cm, 10 cm, 1 m ou à 10 m. Généralement, cette distance d est également inférieure à 50 m ou 30 m.

La fréquence fᵣ de l'onde électromagnétique utilisée pour établir la liaison 30 est souvent choisie dans le groupe composé des fréquences suivantes :
- la plage des fréquences comprises entre 860 MHz et 960 MHz pour les radio-étiquettes UHF (Ultra High Frequency),
- la fréquence 13,56 MHz, et
- la fréquence 125 kHz.

Par exemple, la radio-étiquette 6 travaille dans la plage de fréquences comprise entre 860 MHz et 960 MHz.

La radio-étiquette 6 est une radio-étiquette passive, c'est-à-dire qu'elle est dépourvue de source d'énergie électrique embarquée dans la radio-étiquette. Autrement dit, la radio-étiquette 6 est uniquement alimentée à partir de l'énergie captée par l'antenne 14.

Le lecteur 8 est capable d'établir la liaison 30 avec la radio-étiquette 6 et donc de lire cette radio-étiquette 6. A cet effet, le lecteur comporte :
- une antenne 32,
- un émetteur-récepteur radio 34 directement raccordé à l'antenne 32,
- un calculateur électronique 36 programmable apte à exécuter des instructions enregistrées dans une mémoire, et
- une mémoire 38.

La mémoire 38 contient les instructions nécessaires pour que le lecteur 8 soit capable de lire la radio-étiquette 6 et, en particulier, soit capable de détecter que la température de la radio-étiquette 6 a dépassé le seuil S_{T}.

Le lecteur 8 est par exemple identique à celui décrit dans l'article A1. Ainsi, seuls les détails nécessaires à la compréhension de l'invention sont donnés ici. Le lecteur 8 est capable d'ajuster automatiquement la fréquence fᵣ de l'onde électromagnétique utilisée pour établir la liaison 30. Plus précisément, le lecteur 8 est capable de sélectionner automatiquement la fréquence fᵣ pour laquelle le taux τ de transfert d'énergie entre le lecteur 8 et la radio-étiquette 6 est supérieur à une limite prédéterminée α. Par exemple, la limite α est supérieure ou égale à 0,8 ou 0,9. Ce taux τ est défini au chapitre III de l'article A1. Ainsi, sa définition n'est pas reprise ici. On rappellera simplement que ce taux τ est compris entre 0 et 1 et que pour une onde électromagnétique reçue par la radio-étiquette, plus il est proche de 1, plus la quantité d'énergie électrique qui peut être récupérée par la radio-étiquette à partir de cette onde électromagnétique est importante. Ce taux τ dépend de l'impédance d'entrée de la puce 16 et de l'impédance de l'antenne 14. Par exemple, ce taux τ est défini par la relation suivante : τ = 4RₐR_{c}/|Zₐ+Z_{c}|², où :
- Rₐ et R_{c} sont les résistances, respectivement, de l'antenne 14 et de l'impédance d'entrée de la puce 16,
- Zₐ et Z_{c} sont les impédances, respectivement, de l'antenne 14 et de l'impédance d'entrée de la puce 16.

Lorsque le taux τ est supérieur à la limite α, le lecteur 8 peut lire une radio-étiquette plus éloignée du lecteur ou, pour une distance donnée, lire cette radio-étiquette avec une onde électromagnétique moins puissante.

Ici, comme dans l'article A1, pour indiquer au lecteur 8 que la température de la radio-étiquette a dépassé le seul S_{T}, l'impédance de l'antenne 14 est modifiée. Cela se traduit par une modification de la plage de fréquences où le taux τ est supérieur à la limite α. Ici, la plage de fréquences pour laquelle le taux τ est supérieur à la limite α, quand la température de la radio-étiquette 6 est inférieure au seuil S_{T}, est notée [f_{CL}; f_{CH]}. La plage de fréquence pour laquelle le taux τ est supérieur à la limite α, quand la température de la radio-étiquette est supérieure au seuil S_{T}, est notée [f_{HL} ; f_{HH}]. De préférence, lorsque la température de la radio-étiquette 6 est inférieure au seuil S_{T}, en dehors de la plage [f_{CL}; f_{CH]}, le taux τ décroit très rapidement pour être nul ou presque nul. De même, lorsque la température de la radio-étiquette est supérieure au seuil S_{T}, en dehors de la plage [f_{HL} ; f_{HH]}, le taux τ décroit très rapidement pour également être presque nul en dehors de cette plage. Ici, comme cela est décrit plus en détail plus loin, la modification de l'impédance de l'antenne 14 provoquée par le franchissement du seuil S_{T} est suffisamment importante pour qu'il n'existe pas de fréquence commune entre les plages [f_{CL}; f_{CH}] et [f_{HL}; f_{HH}]. Ainsi, si la fréquence choisie automatiquement par le lecteur 8 pour lire la radio-étiquette 6 est comprise dans la plage [f_{CL}; f_{CH}], alors, le lecteur 8 en déduit automatiquement que la température de la radio-étiquette est restée inférieure au seuil S_{T}. A l'inverse, si la fréquence automatiquement choisie par le lecteur 8 pour lire la radio-étiquette 6 est comprise dans la plage [f_{HL}; f_{HH}], alors le lecteur 8 en déduit que la température de la radio-étiquette 6 a dépassé le seuil S_{T}.

Pour cela, le lecteur 8 comporte dans sa mémoire une table 39 qui associe la plage [f_{CL} ; f_{CH}] à une indication t_{c} codant le fait que la température de la radio-étiquette 6 est inférieure au seuil S_{T}. Cette table 39 associe également la plage [f_{HL} ; f_{HH}] à une indication t_{H} qui code le fait que la température de la radio-étiquette 6 a dépassé le seuil S_{T}.

On remarquera que dans ce mode de réalisation, bien que la radio-étiquette 6 comporte une seule puce 16 et une seule antenne 14, le lecteur 8 est capable de lire cette puce aussi bien dans le cas où sa température est inférieure que dans le cas où sa température est supérieure au seuil S_{T}. Ainsi, quelle que soit la température de la radio-étiquette 6, le lecteur 8 peut lire son identifiant 24.

Le lecteur 8 est raccordé à l'appareil 10 pour lui transmettre les données lues dans la radio-étiquette 6. Par exemple, le lecteur 8 transmet à l'appareil 10 l'identifiant 24 lu dans la radio-étiquette 6 ainsi que l'indication t_{c} ou t_{H} déduite de la fréquence fᵣ utilisée pour lire la radio-étiquette 6.

Par exemple, l'appareil 10 est équipé d'une unité centrale 40 et d'un écran 42 pour afficher sur cet écran de façon directement lisible et compréhensible par un être humain les données lues dans la radio-étiquette 6.

La radio-étiquette 6 comprend un actionneur qui modifie l'inductance de l'antenne 14 en réponse au franchissement du seuil S_{T} par la température de cette radio-étiquette. Pour cela, cet actionneur déforme en flexion l'antenne 14 entre une conformation moins fléchie, représentée sur les figures 2 et 3, et une conformation fléchie représentée sur les figures 4 et 5. Dans sa conformation moins fléchie, le substrat 12 et l'antenne 14 s'étendent horizontalement. Dans ce mode de réalisation, la déformation entre les conformations fléchie et moins fléchie est réversible. Ainsi, si la température de la radio-étiquette 6 redescend en-dessous du seuil S_{T}, l'antenne 14 revient dans la conformation moins fléchie.

Un premier mode de réalisation de l'antenne 14 et de cet actionneur va maintenant être décrit en référence aux figures 2 à 5. L'antenne 14 présente une inductance propre typiquement supérieure à 0,5 µH et, de préférence, supérieure à 1 µH aussi bien dans sa conformation moins fléchie que dans sa conformation fléchie. A cet effet, ici, l'antenne 14 est en forme de spirale. Plus précisément, elle comporte une piste électrique 50 qui s'enroule autour d'un axe central vertical tout en s'éloignant progressivement de cet axe central. La piste 50 fait plusieurs tours complets autour de cet axe central pour former plusieurs spires. Le nombre de spires est fixé pour que l'inductance propre de l'antenne 14 soit supérieure au seuil précédemment cité.

Classiquement, la piste 50 s'enroule autour d'un espace central 52. Cet espace central 52 présente, par exemple, une surface, dans un plan horizontal, supérieure à 1 cm² ou 2 cm² et généralement inférieure à 25 cm² ou 10 cm². La puce 16 est fixée sur le substrat 12 à l'intérieur de cet espace central 52. Par ailleurs, le rectangle horizontal de plus petite surface qui contient entièrement la piste 50 a, par exemple, une surface inférieure à 30 cm² ou 25 cm² et, de préférence, une surface inférieure à 5 cm² ou 3 cm². Le nombre de spires de l'antenne 14 est souvent supérieur à 2, 4 ou 5.

L'antenne 14 comporte aussi un brin rectiligne 54 directement raccordé, d'un côté, à l'émetteur-récepteur 18 et, de l'autre côté, à l'extrémité intérieure de la piste 50. Ici, ce brin 54 est un prolongement rectiligne de la piste 50.

La largeur de la piste 50, dans une direction horizontale, est généralement comprise entre 100 µm et 2 mm. L'épaisseur t_{A} de la piste 50, dans une direction verticale, est généralement comprise entre 1 µm et 500 µm. Sur la figure 3, on note également tₛ, l'épaisseur du substrat 12. Ici, l'épaisseur tₛ est constante et comprise, par exemple, entre 100 µm et 5 mm.

Dans ce mode de réalisation, dans sa conformation fléchie, le substrat 12 et l'antenne 14 sont incurvés vers le haut, c'est-à-dire que les bords du substrat 12 remontent vers le haut. Ici, le haut et le bas sont définis par rapport à la direction verticale.

Le débattement maximal de l'antenne 14 entre ses conformations moins fléchie et fléchie est noté Aₘₐₓ sur la figure 5. Sur cette figure 5, les lignes en pointillées représentent la conformation moins fléchie de l'antenne 14. Ce débattement Aₘₐₓ est ici au moins supérieur à l'épaisseur t_{A} de l'antenne 14 et, de préférence, au moins 10 ou 20 ou 100 fois supérieur à l'épaisseur t_{A}. Le débattement de l'antenne 14 entre ses conformations moins fléchie et fléchie modifie la distance inter-spire de la projection orthogonale de la piste 50 sur un plan horizontal. Dans le cas décrit ici, cette distance inter-spire décroit quand on passe de la conformation moins fléchie vers la conformation plus fléchie.

Cela se traduit par une modification importante de l'inductance de l'antenne 14. Ici, on considère qu'une modification de l'inductance propre de l'antenne 14 est importante lorsque l'inductance varie de plus de 10 % et, de préférence, de plus de 20 % ou 30 % par rapport à la valeur de l'inductance de l'antenne 14 dans sa conformation moins fléchie. C'est cette modification de l'inductance de l'antenne 14 qui se traduit par l'existence des deux plages distinctes [f_{CL} ; f_{CH}] et [f_{HL} ; f_{HH}].

Dans ce mode de réalisation, l'actionneur qui déplace l'antenne 14 entre ses conformations moins fléchie et fléchie est obtenu en réalisant la piste 50 dans un matériau transducteur qui transforme la variation de température de la radio-étiquette 6 lorsqu'elle franchit le seuil S_{T} en une brusque déformation mécanique de la piste 50. Ici, lorsque la température de la radio-étiquette 6 dépasse le seuil S_{T}, la piste 50 se rétrécit brusquement. A cet effet, le matériau transducteur utilisé pour réaliser la piste 50 est un matériau à mémoire de forme. Par matériau à mémoire de forme, on désigne ici un matériau dont le taux d'allongement est supérieur à 1 % ou 2 % en réponse à une variation de température typiquement d'au moins 2°C et, par exemple, de 5°C ou 10°C ou 20°C. Le taux d'allongement est le rapport ΔL/L entre l'amplitude ΔL de la déformation mesurée le long de l'axe où cette déformation est maximale sur la longueur L de ce matériau mesurée le long du même axe. Cette variation importante de la longueur du matériau à mémoire de forme est obtenue lorsque sa température de transition est franchie. Ici, le matériau à mémoire de forme est choisi pour que sa température de transition soit égale au seuil S_{T} à plus ou moins 5°C près ou plus ou moins 1°C près. On notera aussi que, typiquement, un matériau à mémoire de forme rétrécit brusquement lorsque sa température dépasse sa température de transition. Autrement dit, il présente un comportement opposé à celui obtenu par une simple dilatation thermique. Ce rétrécissement du matériau à mémoire de forme est représenté par des flèches 56 sur la figure 4 qui pointe vers l'espace central 52.

Dans ce mode de réalisation, le matériau à mémoire de forme choisi est également un matériau électriquement conducteur. Typiquement, il s'agit d'un alliage à mémoire de forme. Ainsi, la même piste 50 remplit à la fois la fonction d'actionneur et la fonction d'antenne.

La piste 50 est entièrement fixée sans aucun degré de liberté et en permanence sur la face extérieure du substrat 12. En particulier, la piste 50 reste continûment fixée sur le substrat 12 pendant toute sa déformation. Ainsi, elle forme avec le substrat 12 une structure multicouche qui se tord en flexion quand le matériau à mémoire de forme rétrécit. Cette structure travaille donc comme un bilame. Pour que l'amplitude Aₘₐₓ du débattement soit supérieure au seuil précédemment cité, il faut donc ajuster de façon appropriée la rigidité en flexion de la piste 50 par rapport à la rigidité en flexion du substrat 12. Pour ajuster la rigidité de la piste 50 et du substrat 12, il est possible de jouer sur le choix des matériaux utilisés pour les réaliser et/ou sur leur épaisseur. Par la suite, par rigidité en flexion, on désigne le produit du module de Young du matériau à 25°C par son épaisseur. La rigidité en flexion est également appelée « rigidité flexionnelle » ou « résistance à la flexion ». Ici, pour obtenir le débattement Aₘₐₓ souhaité, on choisit les matériaux et leur épaisseur de manière à vérifier la relation suivante E_{A*} t_{A}>βE_{s*} tₛ, où :
- E_{A} et t_{A} sont respectivement le module de Young et l'épaisseur de l'antenne 14,
- Eₛ et tₛ sont respectivement, le module de Young du substrat 12 et son épaisseur, et
- β est une constante strictement supérieure à 1 et, de préférence, supérieure à 10, 20 ou 100

Par exemple, le matériau à mémoire de forme utilisé ici est du Nitinol qui est un alliage de nickel et de titane et dont le module de Young à 25°C est typiquement supérieur à 150 GPa. A l'inverse, le substrat 12 est par exemple un polymère tel que du polyéthylène naphtalène (PEN), polytéréphtalate d'éthylène (PET) ou plexiglas dont l'épaisseur est comprise entre 200 µm et 2 mm. Le module de Young du plexiglas à 25°C est typiquement égal à 3 GPa.

Si la radio-étiquette 6 comporte d'autres couches de matériau que le substrat 12 et l'antenne 14, la rigidité en flexion de ces autres couches est par exemple choisie très inférieure à la rigidité en flexion du matériau à mémoire de forme. Par très inférieure, on désigne le fait que la rigidité en flexion de ces autres couches est 100 ou 1000 fois inférieure à la rigidité en flexion de la piste 50. A titre d'illustration, une couche supplémentaire peut être une couche de vernis déposée sur la face extérieure du substrat 12 et l'antenne 14 pour protéger cette antenne 14 des agressions de l'environnement extérieur.

Le fonctionnement de la radio-étiquette 6 se déduit des explications précédemment données.

La figure 6 représente une radio-étiquette 100 susceptible d'être utilisée à la place de la radio-étiquette 6 dans l'ensemble 2. Elle est identique à la radio-étiquette 6 sauf que la puce 16 est remplacée par une simple charge électrique 102 raccordée électriquement entre les deux extrémités de l'antenne 14. Sur la figure 6, la piste en pointillé qui raccorde électriquement une borne de la charge 102 à l'extrémité extérieure de l'antenne 14 indique que cette piste est, par exemple, réalisée sur la face du substrat 12 opposée à la face extérieure. Dans ce mode de réalisation, la charge 102 est un condensateur qui forme avec l'antenne 14 un circuit LC résonnant. Le circuit LC ainsi formé résonne à une fréquence de résonance f_{R1} quand l'antenne 14 est dans sa conformation moins fléchie et a une fréquence f_{R2} dans sa conformation fléchie. La capacité du condensateur 102 et la valeur de l'inductance propre de l'antenne 14 sont ajustées pour que les fréquences f_{R1} et f_{R2} coïncident avec des fréquences que le lecteur 8 est capable d'émettre. Dans ces conditions, lorsque l'antenne 14 est dans sa conformation moins fléchie, le taux τ est maximum pour une onde électromagnétique émise à la fréquence f_{R1}. Par contre, lorsque l'antenne 14 est dans sa conformation fléchie, le taux τ est maximum pour une onde électromagnétique émise à la fréquence f_{R2}.

Le lecteur 8 est donc capable de lire l'information selon laquelle le seuil S_{T} est dépassé ou non de la même manière qu'avec la radio-étiquette 6. Toutefois, dans ce mode de réalisation simplifié, aucune puce électronique n'est utilisée. Par conséquent, l'identifiant 24 de la radio-étiquette n'est pas transmis au lecteur 8.

La figure 7 représente une radio-étiquette 110 susceptible d'être utilisée à la place de la radio-étiquette 6 dans l'ensemble 2. Cette radio-étiquette 110 est identique à la radio-étiquette 6 sauf que l'antenne 14 est remplacée par une antenne 112. L'antenne 112 n'est pas réalisée dans un matériau à mémoire de forme ou dans un matériau magnétostrictif. L'antenne 112 est par exemple une simple piste en matériau conducteur comme du cuivre. Par exemple, l'antenne 112 à la même forme que l'antenne 14. De plus, la radio-étiquette 110 comporte, en tant qu'actionneur, une bande 114 en matériau à mémoire de forme entièrement déposée et fixée sans aucun degré de liberté sur la face extérieure du substrat 12. La bande 114 reste continûment fixée sur le substrat 12 aussi bien avant qu'après avoir rétrécit. La bande 114 forme donc avec le substrat 12 une structure multicouche qui se déforme en flexion en réponse à une variation de température. Dans ce mode de réalisation, la bande 114 est électriquement isolée de l'antenne 112. Par exemple, la bande 114 s'enroule aussi autour de la puce 16. Ici, elle est fixée sur la face extérieure du substrat 12 dans l'espace situé entre les spires de l'antenne 112.

Dans le mode de réalisation de la figure 7, le matériau à mémoire de forme utilisé n'a pas besoin d'être également un matériau électriquement conducteur. Par exemple, la bande 114 est réalisée dans un polymère à mémoire de forme comme celui-ci décrit dans l'article A1.

La figure 8 représente une radio-étiquette 120 identique à la radio-étiquette 110 sauf que la bande 114 est remplacée par une bande 122. La bande 122 est identique à la bande 114 sauf qu'elle est directement déposée et fixée sans aucun degré de liberté non pas sur le substrat 12 mais sur l'antenne 112.

La figure 9 représente une radio-étiquette 130 identique à la radio-étiquette 6 sauf que l'antenne 14 est remplacée par une antenne 132. L'antenne 132 est identique à l'antenne 14 sauf que la piste 50 est remplacée par une piste134. Cette piste 134 est identique à la piste 50 sauf qu'elle est réalisée en matériau magnétostrictif ou à mémoire de forme magnétique et non pas dans un matériau à mémoire de forme thermique.

Ici, par matériau magnétostrictif, on désigne un matériau dont la valeur absolue du coefficient de magnétostriction λₛ à saturation est supérieure 10 ppm (partie par million) et, de préférence, supérieur à 100 ou 1000 ppm. Le coefficient λₛ est défini par la relation suivante λₛ = ΔL/L, où ΔL est l'amplitude de la déformation du matériau magnétostrictif le long de la direction où sa déformation est maximale et L est la longueur de ce matériau dans cette direction en absence de champ magnétique. Par exemple, le matériau magnétostrictif est du Terfenol-D ou un alliage FeSiB ou un alliage FeCo. Dans ce cas, le coefficient de magnétostriction λₛ de ce matériau est strictement positif. Le matériau magnétostrictif peut également avoir un coefficient de magnétostriction λₛ négatif. Par exemple, dans ce cas, le matériau magnétostrictif est du SamFeNol qui est un alliage de samarium.

Un matériau à mémoire de forme magnétique est un matériau qui travaille comme décrit pour les matériaux à mémoire de forme thermique sauf que sa déformation est déclenchée par une variation du champ magnétique et non pas par une variation de température. Comme pour les matériaux à mémoire de forme thermique, le matériau à mémoire de forme magnétique présente un taux d'allongement supérieur à 1 % ou 2 %. Par exemple, il peut s'agir d'un alliage de NiMnGa.

La radio-étiquette 130 fonctionne comme la radio-étiquette 6 sauf que c'est une variation de l'amplitude du champ magnétique créée, par exemple, par un aimant, une bobine ou toute autre source de champ magnétique externe auquel est exposée la radio-étiquette 130 qui fait varier l'impédance de l'antenne 132.

De nombreux autres modes de réalisation sont possibles. Par exemple, la radio-étiquette peut comporter une batterie ou un système de récupération d'énergie additionnel et donc se comporter comme une radio-étiquette semi-passive ou active.

D'autres formes de l'antenne 14 sont possibles. Par exemple, l'antenne peut aussi être en forme de méandre. Dans ce cas, l'antenne s'étend le long d'un axe longitudinal de la face extérieure du substrat et comporte plusieurs brins disposés les uns après les autres le long de cet axe longitudinal. Chacun de ces brins formant un segment, par exemple rectiligne, qui coupe l'axe longitudinal en un seul point. Ces brins sont électriquement raccordés les uns aux autres par d'autres brins entièrement situés soit d'un seul côté de cet axe longitudinal. Une antenne conformée en méandre est par exemple représentée dans l'article A1. L'antenne peut aussi être conformée en « T » comme décrit dans l'article A1. On peut également utiliser des versions « fentes » de ces antennes, ces antennes se caractérisant alors par une absence de matériau (« fente ») localement dans le métal constituant l'antenne.

L'agencement de la puce 16 peut être différent. Par exemple, l'émetteur-récepteur 18 peut être intégré à l'intérieur du calculateur 20.

Dans un autre mode de réalisation, la charge électrique 102 est remplacée par une résistance. Elle peut aussi être remplacée par une simple liaison filaire. Dans ce cas, le lecteur 8 détecte la modification de l'inductance mutuelle entre l'antenne 32 et l'antenne 14 pour détecter si le seuil S_{T} de température a été franchi ou non.

De nombreux autres modes de réalisation de l'actionneur sont possibles. Par exemple, plusieurs matériaux à mémoire de forme différents peuvent être utilisés pour réaliser différentes parties de l'antenne. Ces matériaux à mémoire de forme présentent alors chacun une température de transition différente des autres matériaux à mémoire de forme utilisés. Par exemple, une première partie de l'antenne est réalisée dans un premier matériau à mémoire de forme ayant une température de transition T₁ et une autre partie de l'antenne est réalisée dans un second matériau à mémoire de forme ayant une température de transition T₂ plus grande que la température T₁. Dans ces conditions, si la température de l'antenne est inférieure à la température T₁, cela correspond à une première conformation de l'antenne et donc à une première valeur de l'impédance de l'antenne. Si la température de l'antenne est comprise entre les températures T₁ et T₂, l'antenne fléchit pour atteindre une seconde conformation de l'antenne et donc une seconde valeur de l'impédance de cette antenne. Enfin, si la température de l'antenne dépasse la température T₂, l'antenne fléchit, par exemple encore plus, pour atteindre une troisième conformation de l'antenne dans laquelle elle présente une troisième valeur d'inductance. Le lecteur 8 peut détecter quelle est la valeur de l'inductance actuelle de l'antenne et donc déterminer la plage de température de l'antenne. Ainsi, l'utilisation de différents matériaux à mémoire de forme permet de détecter le franchissement de plusieurs seuils de température.

Dans un autre mode de réalisation, le substrat et l'antenne sont chacun réalisés dans un matériau à mémoire de forme différent, c'est-à-dire des matériaux à mémoire de forme ayant des températures de transition différentes. Ainsi, ce mode de réalisation permet de détecter le franchissement de deux seuils différents de températures.

Toujours dans un autre mode de réalisation, il est aussi possible de fixer sur le substrat 12, en plus de la bande 114, une autre bande réalisée dans un matériau à mémoire de forme ayant une température de transition différente de celle de la bande 114. On peut ainsi détecter le franchissement de deux seuils de température différents.

En variante, seule une partie de l'antenne 14 est réalisée dans le matériau à mémoire de forme. Le restant de l'antenne est alors réalisé dans un matériau conducteur dépourvu des propriétés des matériaux à mémoire de forme.

Dans une autre variante, le substrat 12 dans la conformation moins fléchie ne s'étend pas dans un plan. Par exemple, dans la conformation moins fléchie, le substrat 12 peut déjà être incurvé comme représenté sur la figure 5. Dans ce cas, dans la conformation fléchie, il est, par exemple, encore plus incurvé.

Dans une autre variante, l'antenne 14 est dans sa conformation fléchie lorsque la température de la radio-étiquette est inférieure au seuil S_{T} et dans sa conformation moins fléchie lorsque la température de la radio-étiquette est supérieure à ce seuil S_{T}. Pour cela, le substrat 12 est par exemple incurvé du côté opposé à celui représenté sur la figure 5 en absence de toute contrainte exercée par l'antenne 14. Dans ces conditions, le rétrécissement de l'antenne 14 lorsque sa température dépasse le seuil S_{T} ramène le substrat 12 et donc l'antenne 14 vers une conformation moins fléchie.

Le brin 54 peut aussi être réalisé dans un matériau à mémoire de forme.

Le matériau à mémoire de forme utilisé peut être agencé de manière à ce que la déformation entre la conformation moins fléchie et la conformation plus fléchie soit irréversible. A cet effet, on peut procéder comme décrit dans l'article A1.

La bande 114 peut aussi être fixée différemment sur le substrat 12. Par exemple, elle peut être déposée sur la face arrière du substrat 12 situé du côté opposé à la face sur laquelle est fixée l'antenne 112. La bande 114 n'a pas besoin non plus d'être en forme de spirale. Par exemple, la bande 114 est une couche carrée en matériau à mémoire de forme dont la surface est égale à celle de l'antenne 112 à plus ou moins 10 % ou plus ou moins 30 % près et qui est collée sur la face arrière du substrat 12 en vis-à-vis de cette antenne 112.

D'autres procédés de modulation peuvent être utilisés pour transmettre des données entre le lecteur et la radio-étiquette. Par exemple, l'antenne 14 est raccordée électriquement avec un condensateur variable pour former un circuit LC résonnant. L'émetteur-récepteur 18 modifie la valeur de ce condensateur en fonction de la valeur du bit ou du groupe de bits à transmettre. Cela modifie alors la valeur de la fréquence de résonance du circuit LC. Le lecteur détecte cette modification de la fréquence de résonance du circuit LC et en déduit la valeur du bit ou du groupe de bits transmis. Ce protocole de communication fonctionne particulièrement bien lorsque les antennes du lecteur et de la radio-étiquette sont couplées par induction magnétique. Ce protocole est donc généralement utilisé en champ proche, c'est-à-dire lorsque les antennes 14 et 32 sont séparées par une distance inférieure à λ/(2π), où :
- À est la longueur d'onde de l'onde électromagnétique utilisée pour communiquer entre ces antennes, et
- n est le nombre Pi.

Dans une autre variante, c'est l'inductance de l'antenne qui est modifiée par l'émetteur-récepteur 18. Pour cela, l'émetteur-récepteur 18 commande un interrupteur électrique qui modifie l'inductance de l'antenne. Ces deux modes de réalisation sont par exemple décrits en détail à la page 21 de l'article suivant Youbok Lee : « Antenna Circuit Design for RFID applications », Microchip Technology INC, 2003, Note technique AN710.

La détection du franchissement du seuil S_{T} peut aussi être détectée par le lecteur 8 simplement par le fait qu'il n'arrive pas à établir la liaison 30 avec la radio-étiquette alors que celle-ci est située à une distance où, en absence de modification de l'inductance de l'antenne, la liaison 30 aurait pu être établie. Par exemple, pour cela, la radio-étiquette est systématiquement placée au-delà d'une distance minimum entre le lecteur et la radio-étiquette et en deçà d'une distance maximum au-delà de laquelle le lecteur ne peut pas normalement établir la liaison 30 avec cette radio-étiquette. Dans ces conditions, lorsque la température est en dessous du seuil S_{T}, le lecteur 8 arrive à établir la liaison 30 avec la radio-étiquette 6. Dans le cas contraire, c'est-à-dire si la température a dépassé le seuil S_{T}, le lecteur n'arrive pas à établir la liaison 30, ce qui lui indique que la température de la radio-étiquette 6 a franchi le seuil S_{T}. Dans ce mode de réalisation simplifié, il n'est pas nécessaire que le lecteur soit capable de choisir automatiquement la fréquence pour laquelle le taux de transfert τ est supérieur à la limite α. Typiquement, dans ce cas, la fréquence de lecture de la radio-étiquette est fixée une fois pour toute.

Tous les modes de réalisation et variantes précédemment décrits s'appliquent aussi au cas où le matériau transducteur utilisé est un matériau magnétostrictif ou à mémoire de forme magnétique.

## Revendications

1. Radio-étiquette apte à indiquer à un lecteur, par l'intermédiaire d'une liaison sans-fil, qu'une variation d'énergie a franchi un seuil prédéterminé, cette variation d'énergie étant choisie dans le groupe composé d'une variation de la température de la radio-étiquette et d'une variation du champ magnétique dans lequel est plongé la radio-étiquette, cette radio-étiquette comportant :
- un substrat (12) électriquement isolant,
- une antenne (14 ; 112 ; 132) pour établir la liaison sans-fil avec le lecteur, cette antenne étant entièrement déposée et fixée sans aucun degré de liberté sur le substrat isolant, et
- un actionneur (50 ; 114 ; 122 ; 134) apte à modifier l'impédance de cette antenne lorsque la variation d'énergie franchit le seuil prédéterminé pour indiquer au lecteur cet événement, cet actionneur comportant à cet effet un matériau transducteur apte à transformer la variation d'énergie en une déformation mécanique, le matériau transducteur étant choisi dans un groupe composé d'un matériau à mémoire de forme thermique, d'un matériau magnétostrictif et d'un matériau à mémoire de forme magnétique,
**caractérisée en ce que** le matériau transducteur est déposé et fixé sans aucun degré de liberté sur le substrat (12) ou l'antenne (112) pour former avec le substrat ou l'antenne une structure multicouche qui déforme l'antenne (14 ; 112 ; 132) en flexion entre une conformation fléchie et une conformation moins fléchie lorsque la variation d'énergie franchit le seuil prédéterminé.

2. Radio-étiquette selon la revendication 1, dans laquelle le matériau transducteur est aussi un matériau électriquement conducteur et constitue également au moins une partie de l'antenne (14 ; 132) de manière à remplir à la fois le rôle d'antenne et le rôle d'actionneur.

3. Radio-étiquette selon la revendication 2, dans laquelle la totalité de l'antenne (14 ; 132) est réalisée dans le matériau transducteur.

4. Radio-étiquette selon l'une quelconque des revendications précédentes, dans laquelle :
- deux extrémités de l'antenne sont raccordées électriquement l'une à l'autre soit directement par l'intermédiaire d'une piste électrique soit par l'intermédiaire d'une charge électrique (102) pour former un circuit électrique fermé, et
- la radio-étiquette est dépourvue de puce électronique électriquement raccordée à ce circuit électrique fermé.

5. Radio-étiquette selon l'une quelconque des revendications précédentes, dans laquelle le matériau transducteur est un matériau à mémoire de forme thermique dont le taux d'allongement est supérieur à 1 % en réponse à une variation de température de 10°C autour du seuil prédéterminé.

6. Radio-étiquette selon l'une quelconque des revendications précédentes, dans laquelle le matériau transducteur est agencé de manière à ce que sa déformation entre ses conformations fléchie et moins fléchie soit irréversible.

7. Radio-étiquette selon l'une quelconque des revendications précédentes, dans laquelle l'amplitude du débattement maximal (Aₘₐₓ) de l'antenne entre ses conformations fléchie et moins fléchie est supérieure à l'épaisseur de l'antenne.

8. Radio-étiquette selon l'une quelconque des revendications précédentes, dans laquelle la radio-étiquette est une radio-étiquette passive alimentée uniquement à partir de l'énergie des ondes électromagnétiques émises par le lecteur.

9. Radio-étiquette selon l'une quelconque des revendications précédentes, dans laquelle deux extrémités de l'antenne sont raccordées électriquement l'une à l'autre par l'intermédiaire d'un condensateur (102) pour former un circuit LC résonant dont la fréquence de résonance est fonction de l'inductance de l'antenne.

10. Ensemble comportant :
- une radio-étiquette (6 ; 100 ; 110 ; 120 ; 130) conforme à l'une quelconque des revendications précédentes, dans laquelle la déformation du matériau transducteur est apte à faire varier la plage de fréquences pour laquelle le taux de transfert d'énergie électrique entre un lecteur et la radio-étiquette est supérieur à une limite prédéterminée, d'une première plage vers une seconde plage en réponse au franchissement du seuil prédéterminé par la variation d'énergie, ces première et seconde plages de fréquences n'ayant pas de fréquences commune, et
- le lecteur (8) apte à émettre une onde électromagnétique à une fréquence d'interrogation pour lire la radio-étiquette, ce lecteur étant apte à choisir automatiquement la fréquence d'interrogation à utiliser pour que le taux de transfert d'énergie électrique entre le lecteur et la radio-étiquette soit supérieur à la limite prédéterminée, ce lecteur comportant en plus une table (39) pré-enregistrée qui associe aux première et seconde plages de fréquences des indications, respectivement, de non franchissement et de franchissement du seuil prédéterminé, et le lecteur est apte à transmettre à un appareil externe l'indication qui est associée, par la table préenregistrée, à la fréquence d'interrogation choisie automatiquement et utilisée pour interroger la radio-étiquette.

## Patentansprüche

1. Funketikett, das in der Lage ist, einer Leseeinrichtung über eine drahtlose Verbindung anzuzeigen, dass eine Energieänderung einen vorbestimmten Schwellenwert überschritten hat, wobei diese Energieänderung aus der Gruppe ausgewählt ist, die aus einer Änderung der Temperatur des Funketiketts und einer Änderung des Magnetfelds, in welches das Funketikett getaucht ist, gebildet ist, wobei dieses Funketikett Folgendes umfasst:
- ein elektrisch isolierendes Substrat (12),
- eine Antenne (14; 112; 132), um die drahtlose Verbindung mit der Leseeinrichtung herzustellen, wobei diese Antenne vollständig und ohne Freiheitsgrad auf dem isolierenden Substrat aufgebracht und befestigt ist, und
- ein Stellglied (50; 114; 122; 134), das in der Lage ist, die Impedanz dieser Antenne zu ändern, wenn die Energieänderung den vorbestimmten Schwellenwert überschreitet, um der Leseeinrichtung dieses Ereignis anzuzeigen, wobei dieses Stellglied zu diesem Zweck ein Wandlermaterial umfasst, das in der Lage ist, die Energieänderung in eine mechanische Verformung umzuwandeln, wobei das Wandlermaterial aus einer Gruppe ausgewählt ist, die aus einem thermischen Formgedächtnismaterial, einem magnetostriktiven Material und einem magnetischen Formgedächtnismaterial gebildet ist,
**dadurch gekennzeichnet, dass** das Wandlermaterial ohne Freiheitsgrad auf dem Substrat (12) oder der Antenne (112) aufgebracht und befestigt ist, um mit dem Substrat oder der Antenne eine Mehrschichtstruktur zu bilden, die die Antenne (14; 112; 132) durch Biegen zwischen einer gebogenen Ausbildung und einer weniger gebogenen Ausbildung verformt, wenn die Energieänderung den vorbestimmten Schwellenwert überschreitet.

2. Funketikett nach Anspruch 1, wobei das Wandlermaterial auch ein elektrisch leitendes Material ist und ebenso mindestens einen Abschnitt der Antenne (14; 132) bildet, um gleichzeitig als Antenne und als Stellglied zu dienen.

3. Funketikett nach Anspruch 2, wobei die gesamte Antenne (14; 132) in dem Wandlermaterial ausgebildet ist.

4. Funketikett nach einem der vorhergehenden Ansprüche, wobei:
- zwei Enden der Antenne entweder direkt über eine elektrische Bahn oder über eine elektrische Ladung (102) miteinander elektrisch verbunden sind, um einen geschlossenen elektrischen Stromkreis zu bilden, und
- das Funketikett keinen elektronischen Chip aufweist, der mit diesem geschlossenen elektrischen Stromkreis elektrisch verbunden ist.

5. Funketikett nach einem der vorhergehenden Ansprüche, wobei das Wandlermaterial ein thermisches Formgedächtnismaterial ist, dessen Dehnungsrate in Reaktion auf eine Temperaturänderung von 10°C um den vorbestimmten Schwellenwert größer als 1 % ist.

6. Funketikett nach einem der vorhergehenden Ansprüche, wobei das Wandlermaterial derart angeordnet ist, dass seine Verformung zwischen seiner gebogenen und weniger gebogenen Ausbildung unumkehrbar ist.

7. Funketikett nach einem der vorhergehenden Ansprüche, wobei die Amplitude der maximalen Auslenkung (Aₘₐₓ) der Antenne zwischen ihrer gebogenen und weniger gebogenen Ausbildung größer als die Dicke der Antenne ist.

8. Funketikett nach einem der vorhergehenden Ansprüche, wobei das Funketikett ein passives Funketikett ist, das nur anhand der Energie der elektromagnetischen Wellen versorgt wird, die von der Leseeinrichtung abgegeben werden.

9. Funketikett nach einem der vorhergehenden Ansprüche, wobei zwei Enden der Antenne über einen Kondensator (102) elektrisch miteinander verbunden sind, um einen LC-Schwingkreis zu bilden, dessen Resonanzfrequenz von der Induktivität der Antenne abhängt.

10. Anordnung, umfassend:
- ein Funketikett (6; 100; 110; 120; 130) nach einem der vorhergehenden Ansprüche, wobei die Verformung des Wandlermaterials in der Lage ist, den Frequenzbereich, für welchen die Übertragungsrate elektrischer Energie zwischen einer Leseeinrichtung und dem Funketikett höher als ein vorbestimmter Grenzwert ist, in Reaktion auf die Überschreitung des vorbestimmten Schwellenwerts durch die Energieänderung von einem ersten Bereich zu einem zweiten Bereich zu ändern, wobei dieser erste und dieser zweite Frequenzbereich keine gemeinsame Frequenz aufweisen, und
- die Leseeinrichtung (8), die in der Lage ist, eine elektromagnetische Welle auf einer Abfragefrequenz abzugeben, um das Funketikett zu lesen, wobei diese Leseeinrichtung in der Lage ist, die zu verwendende Abfragefrequenz automatisch zu wählen, damit die Übertragungsrate elektrischer Energie zwischen der Leseeinrichtung und dem Funketikett höher als der vorbestimmte Grenzwert ist, wobei diese Leseeinrichtung zusätzlich eine vorab gespeicherte Tabelle (39) umfasst, die mit dem ersten und dem zweiten Frequenzbereich jeweils Angaben der Nichtüberschreitung bzw. der Überschreitung des vorbestimmten Schwellenwerts verbindet, und die Leseeinrichtung in der Lage ist, die Angabe, die durch die vorab gespeicherte Tabelle mit der Abfragefrequenz verbunden ist, die automatisch gewählt wird und genutzt wird, um das Funketikett abzufragen, an ein externes Gerät zu übertragen.

## Claims

1. Radio-tag able to indicate, to a reader, via a wireless link, that a variation in energy has crossed a preset threshold, this variation in energy being chosen from the group composed of a variation in the temperature of the radio-tag and of a variation in the magnetic field to which the radio-tag is exposed, this radio-tag including:
- an electrically insulating substrate (12);
- an antenna (14; 112; 132) for establishing the wireless link with the reader, this antenna being entirely deposited on and fastened with no degree of freedom to the insulating substrate; and
- an actuator (50; 114; 122; 134) able to modify the impedance of this antenna when the variation in energy crosses the preset threshold in order to indicate to the reader this event, this actuator including for this purpose a transducer material able to convert the variation in energy into a mechanical deformation, the transducer material being chosen from a group composed of a thermal shape-memory material, a magnetostrictive material and a magnetic shape-memory material;
**characterized in that** the transducer material is deposited on and fastened with no degree of freedom to the substrate (12) or the antenna (112) in order to form with the substrate or the antenna a multilayer structure that deforms the antenna (14; 112; 132) flexurally between a bowed configuration and a less bowed configuration when the variation in energy crosses the preset threshold.

2. Radio-tag according to Claim 1, wherein the transducer material is also an electrically conductive material and also consists at least partially of the antenna (14; 132) so as to play both the role of antenna and the role of actuator.

3. Radio-tag according to Claim 2, wherein the entirety of the antenna (14; 132) is made from the transducer material.

4. Radio-tag according to any one of the preceding claims, wherein:
- two ends of the antenna are electrically connected to each other either directly via an electrical track or via an electrical load (102) in order to form a closed electrical circuit; and
- the radio-tag is devoid of electronic chip electrically connected to this closed electrical circuit.

5. Radio-tag according to any one of the preceding claims, wherein the transducer material is a thermal shape-memory material the degree of elongation of which is higher than 1% in response to a variation in temperature of 10°C about the preset threshold.

6. Radio-tag according to any one of the preceding claims, wherein the transducer material is arranged so that its deformation between its less bowed and bowed configurations is irreversible.

7. Radio-tag according to any one of the preceding claims, wherein the amplitude (Aₘₐₓ) of the maximum displacement of the antenna between its bowed and less bowed configurations is higher than the thickness of the antenna.

8. Radio-tag according to any one of the preceding claims, wherein the radio-tag is a passive radio-tag that is powered only with the energy of the electromagnetic waves emitted by the reader.

9. Radio-tag according to any one of the preceding claims, wherein two ends of the antenna are electrically connected to each other via a capacitor (102) to form an LC resonant circuit the resonant frequency of which depends on the inductance of the antenna.

10. Assembly including:
- a radio-tag (6; 100; 110; 120; 130) according to any one of the preceding claims, wherein the deformation of the transducer material, in response to the crossing of the preset threshold by the variation in energy, is able to make the frequency range in which the degree of electrical energy transfer between a reader and the radio-tag is higher than a preset limit, change from a first range to a second range, these first and second frequency ranges having no common frequencies; and
- the reader (8), which is able to emit an electromagnetic wave at an interrogation frequency in order to read the radio-tag, this reader being able to automatically choose the interrogation frequency to use so that the degree of transfer of electrical energy between the reader and the radio-tag is higher than the preset limit, this reader in addition including a pre-recorded table (39) that associates, with the first and second frequency ranges, indications indicating that the preset threshold has not or has been crossed, respectively, and the reader is able to transmit, to an external device, the indication that is associated, by the pre-recorded table, with the automatically-chosen interrogation frequency that is used to interrogate the radio-tag.
